# EUROPÄISCHE PATENTSCHRIFT

(11) **EP 0 435 022 B1**
(45) Veröffentlichungstag und Bekanntmachung des Hinweises auf die Patenterteilung: **06.04.1994**
(21) Anmeldenummer: 90123146.4
(22) Anmeldetag: 04.12.1990
(51) Int. Cl.: B65G 13/10, B65G 39/09, B65G 39/12

(54) **Lenkrolleneinheit**
Castor-assembly
Ensemble pour roulettes à pivot

(30) Priorität: 28.12.1989 DE 3943185
(43) Veröffentlichungstag der Anmeldung: 03.07.1991
(73) Patentinhaber: BAVARIA CARGO TECHNOLOGIE GMBH, D-80999 München (DE)
(72) Erfinder: Huber, Thomas, W-8127 Iffeldorf (DE)
(74) Vertreter: Bohnenberger, Johannes, Dr.

(56) Entgegenhaltungen:
- EP-A- 0 223 079
- EP-A- 0 329 816
- CH-A- 357 524
- FR-A- 2 605 369
- US-A- 3 435 938
- US-A- 4 125 183

## Beschreibung

Die Erfindung betrifft eine Lenkrolleneinheit, insbesondere zum Bewegen von Frachtgut auf einer Förderbahn, mit wenigstens einer die zu bewegenden Gegenstände abstützenden Tragwalze, die an einem Walzenträger um ihre Symmetrieachse drehbar gelagert ist, wobei der Walzenträger an einer Basis um eine Achse drehbar gelagert ist, die zur Symmetrieachse der Tragwalze senkrecht und exzentrisch angeordnet ist.

Derartige Lenkrolleneinheiten, wie sie beispielsweise der US-A-3,435,938 entnehmbar sind, werden immer dann verwendet, wenn ein Gegenstand über eine normalerweise horizontale Bodenfläche, auf der er aufliegt, bewegt werden und dabei eine "schwache" Führung in seiner jeweiligen Bewegungsrichtung erfahren soll. Unter einer "schwachen" Führung wird dabei verstanden, daß der zu bewegende Gegenstand eine stärkere Führung erfährt, als dies beispielsweise beim Aufliegen auf eine Kugelmatte der Fall ist, daß die Führung aber andererseits nicht so starr ist, daß die Bewegungsrichtung des Gegenstandes nicht jederzeit geändert werden kann. Ist eine solche Änderung erfolgt, so soll in der neuen Bewegungsrichtung wieder die gleiche "schwache" Führung wirksam werden, wie in der vorausgehenden Bewegungsrichtung.

Eine solche Lenkrolleneinheit besitzt im allgemeinen zwei Tragwalzen oder -rollen, die an einem Walzenträger so nebeneinander gelagert sind, daß ihre Symmetrieachsen, um die sie voneinander unabhängig drehbar sind, miteinander fluchten. Die Montage kann entweder an dem zu bewegenden Gegenstand oder an der Bodenfläche erfolgen, über die der zu bewegende Gegenstand hinwegbewegt wird. Die zuletzt genannte Konfiguration ist bei einem besonders wichtigen Anwendungsfall gegeben, nämlich bei Frachtladeeinrichtungen von Flugzeugen, bei denen im Bereich der Laderaumtür die Frachtcontainer während des Be- und Entladens jeweils um 90° gedreht werden müssen.

Läuft bei einem solchen Ladevorgang ein Container mit seiner flachen Unterseite auf eine Lenkrolleneinheit auf, so wird sich diese, wenn die Drehachsen ihrer beiden unmittelbar nebeneinander liegenden Tragwalzen nicht senkrecht zur Bewegungsrichtung des Containers ausgerichtet sind, zunächst so lange um ihre vertikale Achse drehen, bis die eben beschriebene Ausrichtung erreicht ist. Dabei drehen sich die beiden Tragwalzen mit entgegengesetztem Drehsinn und rollen am Boden des aufliegenden Containers ab, wodurch eine sehr geringe Reibung erzielt wird. Nach erfolgter Ausrichtung drehen sich die beiden Tragwalzen gleichsinnig in Bewegungsrichtung des Containers und geben ihm eine "schwache" Führung in dieser Bewegungsrichtung, da sie den Container linienförmig abstützen. Allerdings ist diese Führung nicht so starr, daß die Bewegungsrichtung des Containers nicht geändert werden könnte. Geschieht dies, so dreht sich die Lenkrolleneinheit um ihre vertikale Achse mit, bis die Drehachsen der Tragwalzen wieder senkrecht zur neuen Bewegungsrichtung des Containers stehen.

Bei der aus der US-A-3,435,938 entnehmbaren Lenkrolleneinheit ist zur Erzielung der eben beschriebenen Funktionen der Walzenträger, der in etwa die Form eines geraden, sich nach unten verjüngenden Kreiskegelstumpfes besitzt, vermittels eines sich längs seiner Symmetrieachse erstreckenden, vertikal angeordneten Bolzens und einer auf diesen Bolzen aufgeschraubten Mutter an einem Basisteil so befestigt, daß er um den Befestigungsbolzen drehbar ist, wobei ein ringförmiges Kugellager als Abstützung gegen das Basisteil dient. Seitlich vom Befestigungsbolzen besitzt der Walzenträger zwei Ausnehmungen, in denen die beiden Tragräder bzw. -walzen so jeweils um eine horizontale Achse drehbar angeordnet sind, daß ihre Mantelflächen über die obere Oberfläche des Walzenträgers hinausragen, um den zu bewegenden Gegenstand abzustützen. Die Lagerung der beiden Tragwalzen erfolgt dabei mit Hilfe einer einzigen, zum vertikalen Bolzen exzentrisch angeordneten, durchgehenden Welle, die am Walzenträger fest montiert ist und auf der jede der beiden Tragwalzen mit Hilfe von Kugellagern frei drehbar gelagert ist.

Die Nachteile dieser bekannten Lenkrolleneinheit bestehen darin, daß sie einen großen Fertigungsaufwand erfordert und ein vergleichsweises hohes Gewicht besitzt. Insbesondere der Walzenträger weist eine so komplizierte Form auf, daß seine Herstellung eine Vielzahl von Bearbeitungsschritten mit Bohr-, Dreh- und Fräsvorgängen erfordert. Auch der Zusammenbau der einzelnen Teile ist nicht ganz einfach, da Schraubvorgänge durchgeführt werden müssen und die Lagerwelle für die Tragwalzen erst nach Einsetzen der Tragwalzen in die Ausnehmungen des Walzenträgers durch ihre Lagerbohrungen im Walzenträger und durch die Tragwalzen hindurchgesteckt und am Walzenträger befestigt werden kann.

Aus der CH-A-357 524 ist eine Tragkugelanordnung bekannt, die zum Abstützen eines Gegenstandes bezüglich einer Basis eine Tragkugel aufweist, die über eine Vielzahl von Lagerkugeln in einer teilsphärischen Lagerschale eines Kugelträgers abgestützt ist. Weiterhin ist ein mit dem Kugelträger fest verbindbarer Kugelhalter vorgesehen, der die über seine Außenfläche hinausragende Tragkugel von außen her umgreift und in der Lagerschale sichert. Dabei handelt es sich aber nicht um eine Lenkrolleneinheit, da der Kugelträger bezüglich der Basis, an der der Gegenstand abgestützt werden soll, nicht um eine Achse drehbar gelagert ist, die zu einer der Drehachsen der Kugel senkrecht und exzentrisch ist. Ein Hinweis, wie die oben geschilderten Nachteile der bekannten Lenkrolleneinheiten überwunden werden können, vermag diese Druckschrift daher nicht zu liefern.

Somit liegt der Erfindung die Aufgabe zugrunde, eine Lenkrolleneinheit der eingangs genannten Art zu schaffen, die aus einfach herzustellenden bzw. im Handel fertig erhältlichen Teilen aufgebaut ist und einfach zusammengebaut und am Einsatzort montiert werden kann.

Diese Aufgabe wird erfindungsgemäß durch eine Lenkrolleneinheit mit den Merkmalen des Anspruches 1 gelöst.

Durch die erfindungsgemäßen Maßnahmen kann der zentrale Bestandteil der Lenkrolleneinheit, nämlich der Walzenträger als einfaches Tiefziehteil hergestellt werden. Die Lagerung der Tragwalze in diesem Tiefziehteil erfolgt dann dadurch, daß die jeweils zugehörige Lagerschale mit nebeneinanderliegenden Lagernadeln gefüllt, die Tragwalze auf diese Lagernadeln aufgesetzt und durch den von oben her darübergeschobenen und mit dem Walzenträger fest verbundenen Walzenhalter fixiert wird. Da der Walzenhalter lediglich dazu dient, die Tragwalze und die Lagernadeln an einem Herausfallen aus der Lagerschale zu hindern, kann er als einfaches Kunststoff-Spritzteil ausgebildet werden. Die Abstützung des Walzenträgers am Basisteil erfolgt in der üblichen Weise mit Hilfe eines Kugellagers. Um zu erreichen, daß sich die auf den Lagernadeln aufliegende Tragwalze mit einer besonders geringen Reibung um ihre Längsachse drehen kann, ist eine die Lagerschale umgreifende teilzylindrische Umlaufschale vorgesehen, deren Zylinderradius so bemessen ist, daß zwischen ihrer Innenseite und der Außenseite der Lagerschale ein Teilzylinder-Ringraum gebildet wird, dessen lichte Weite etwas größer als der Außendurchmesser der Lagernadeln ist. Dieser Ringraum ist an seinen Stirnenden verschlossen und ebenfalls mit Lagernadeln gefüllt. Er steht mit dem Innenraum der Lagerschale über Öffnungen in Verbindung, die in den beiden Randbereichen der Teilzylinderwand der Lagerschale und parallel zu deren Längsachse ausgebildet und so dimensioniert sind, daß die Lagernadeln bei einer Drehung der zugehörigen Tragwalze durch die eine der beiden Öffnungen aus dem Innenraum der Lagerschale in den Teilzylinder-Ringraum und durch die andere der beiden Öffnungen aus dem Teilzylinder-Ringraum in den Innenraum der Lagerschale übertreten können.

Ein besonderer Vorteil dieser erfindungsgemäßen Lenkrolleneinheit besteht darin, daß ihre Teile ein sehr geringes Gewicht aufweisen, wodurch sie für den Einsatz in Frachtladeeinheiten für Flugzeuge besonders gut geeignet ist.

Bei einer Lenkrolleneinheit, die zwei Tragwalzen umfaßt, erhält der Walzenträger dadurch eine besonders einfache Gestalt, daß die beiden Tragwalzen in einer gemeinsamen Lagerschale so angeordnet sind, daß zwischen ihren einander gegenüberliegenden Stirnseiten ein Abstand vorhanden ist, der ihre Drehunabhängigkeit gewährleistet.

Eine besonders gute Abstützung der Tragwalzen in der jeweiligen Lagerschale ergibt sich dadurch, daß die Lagernadeln dieselbe axiale Länge besitzen wie die jeweils zugehörige Tragwalze.

Damit der Walzenhalter möglichst einfach und in lösbarer Weise mit dem Walzenträger verbunden werden kann, sind vorzugsweise erste Verriegelungselemente vorgesehen, mit deren Hilfe der Walzenhalter durch einfaches Einrasten am Walzenträger befestigbar ist. Vorzugsweise kann mit Hilfe dieser ersten Verriegelungselemente auch der Umlaufschalenträger durch einfaches Einrasten mit dem Walzenträger fest verbunden werden.

Eine besonders bevorzugte Ausführungsform ist dadurch gekennzeichnet, daß ein topfförmig offenes, einen in etwa kreiszylindrischen Querschnitt besitzendes Gehäusebasisteil vorgesehen ist, das beim Betrieb der Lenkrolleneinheit feststeht und das im Endbereich seiner Zylinderwand eine in etwa senkrecht zur Zylinderwand verlaufende, sich über deren gesamten Umfang erstreckende Lagerschulter aufweist, auf der der Walzenträger über Lagerkugeln für seine Drehung um die Achse der Lenkrolleneinheit abgestützt ist, und daß ein in etwa kreisringförmiges Gehäusedeckelteil am Gehäusebasisteil so befestigt ist, daß es die Lagerschulter von außen her übergreift und dabei den Walzenträger am Gehäusebasisteil drehbar fixiert.

Durch diese Maßnahmen kann in Weiterbildung der Erfindung auch das Basisteil als einfaches Tiefziehteil aus Metall hergestellt werden, während das Gehäusedeckelteil wieder aus Kunststoff gefertigt werden kann, da es lediglich dazu dient, den Walzenträger und die Lagerkugeln daran zu hindern, aus dem Gehäusebasisteil herauszufallen.

Vorzugsweise wird der Walzenträger auf den Lagerkugeln über den Umlaufschalenträger abgestützt, der dann ebenfalls als Metall-Tiefziehteil ausgebildet wird, da er die über die Walzen und die Lagernadeln auf den Walzenträger einwirkenden Last-Kräfte auf das Gehäusebasisteil überträgt.

Um die Befestigung des Gehäusedeckelteils am Gehäusebasisteil möglichst einfach zu gestalten, sind vorzugsweise zweite Verriegelungselemente vorgesehen, mit deren Hilfe das kreisringförmige Gehäusedeckelteil durch einfaches Einrasten am Gehäusebasisteil befestigtbar ist. Gemäß einer besonders bevorzugten Ausführungsform können diese zweiten Verriegelungselemente gleichzeitig dazu verwendet werden, die Lenkrolleneinheit an einer Basis, beispielsweise einem Förderbahnpaneel, durch einfaches Einrasten zu befestigen.

Die Erfindung wird im folgenden anhand eines Ausführungsbeispiels unter Bezugnahme auf die Zeichnung beschrieben; in dieser zeigen:
- Fig. 1: eine perspektivische Ansicht einer erfindungsgemäßen Lenkrolleneinheit,
- Fig. 2: einen Vertikalschnitt der Lenkrolleneinheit längs der Linie II-II der Fig. 1,
- Fig. 3: einen Vertikalschnitt der Lenkrolleneinheit längs der Linie III-III der Fig. 1, und
- Fig. 4: eine perspektivische Darstellung eines Abschnittes eines Förderbahnpaneels mit einer Öffnung, in die eine erfindungsgemäße Lenkrolleneinheit eingesteckt werden kann.

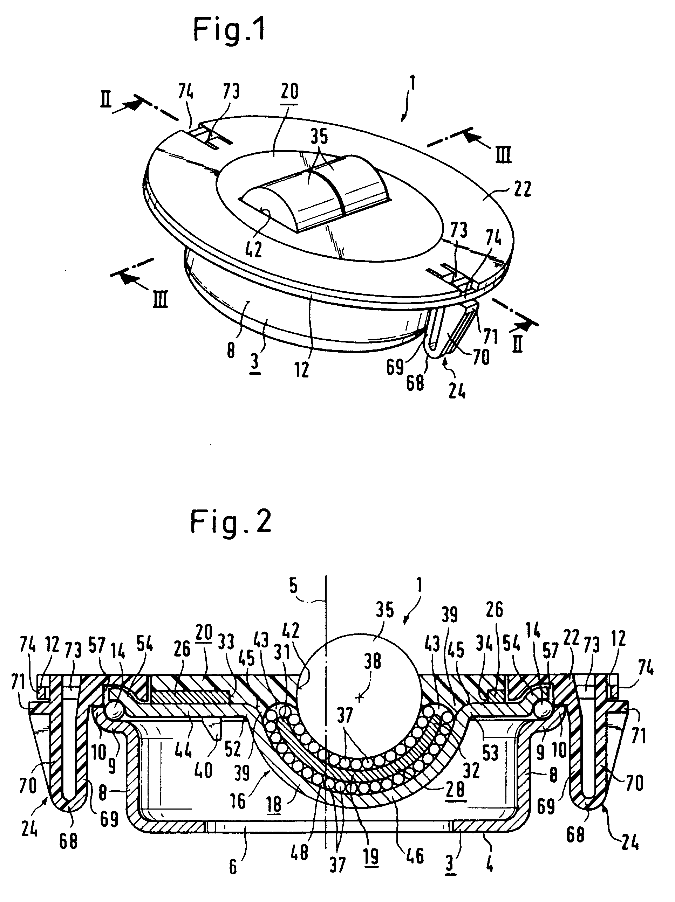

Wie man den Fig. 1 bis 3 entnimmt, umfaßt eine erfindungsgemäße Lenkrolleneinheit 1 ein im wesentlichen kreiszylindrisches, topfförmig nach oben offenes Gehäusebasisteil 3, dessen in der üblichen Betriebsstellung horizontal verlaufende Bodenwand 4 eine zur vertikalen Symmetrieachse 5 des Gehäusebasisteils 3 konzentrisch angeordnete, kreisförmige Öffnung 6 aufweist. Die vertikal nach oben verlaufende Zylinderwand 8 des Gehäusebasisteils 3 besitzt in ihrem oberen Bereich eine sich über den gesamten Umfang erstreckende horizontale Lagerschulter 9, an die sich nach oben ein kurzer vertikal verlaufender Zylinderwandabschnitt 10 anschließt, der an seinem oberen Ende in einen horizontalen, sich über den gesamten Umfang erstreckenden, kreisringförmigen Abstützflansch 12 des Gehäusebasisteils 3 übergeht.

Auf der Oberseite der Lagerschulter 9 sind über den gesamten Umfang des Gehäusebasisteils 3 verteilt Lagerkugeln 14 angeordnet, auf denen eine Dreheinheit 16 so abgestützt ist, daß sie sich frei um die Symmetrieachse 5 der Lenkrolleneinheit 1 drehen kann. Diese Dreheinheit umfaßt einen Umlaufschalenträger 18, einen Walzenträger 19 und einen Walzenhalter 20, die im folgenden noch genauer beschrieben werden.

Die Dreheinheit 16 wird in ihrer Position auf den Lagerkugeln 14 durch ein im wesentlichen kreisringförmiges Gehäusedeckelteil 22 gehalten, das flach auf dem Abstützflansch 12 des Gehäusebasisteils aufliegt und mit diesem über zwei Verriegelungselemente 24 fest verbunden ist, die weiter unten noch genauer beschrieben werden. Das Gehäusedeckelteil 22 besitzt in etwa den gleichen Außendurchmesser wie der horizontale Abstützflansch 12 des Gehäusebasisteils.

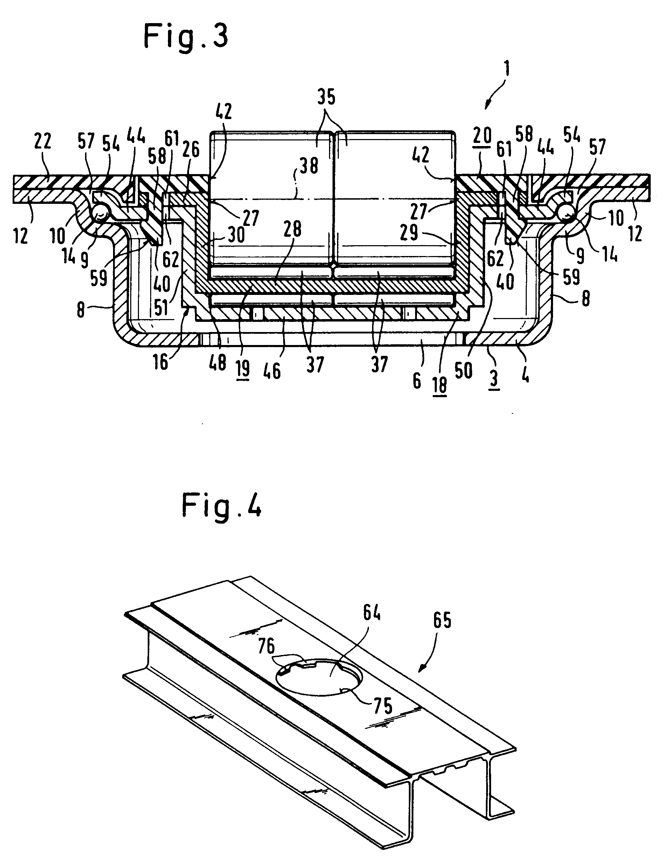

Der den zentralen Bestandteil der Dreheinheit 16 bildende Walzenträger 19 besteht aus einer im zusammengebauten Zustand horizontal angeordneten Kreisscheibe 26, die eine durchgehende, rechteckige Öffnung 27 aufweist, die so positioniert ist, daß sie zu einem Durchmesser der Kreisscheibe 26 symmetrisch, zu dem vom Durchstoßpunkt der Symmetrieachse 5 gebildeten Mittelpunkt dieser Kreisscheibe 26 aber exzentrisch liegt. Unterhalb dieser Öffnung 27 befindet sich eine Lagerschale 28, die die Form eines nach oben offenen Kreiszylindersegments mit horizontal verlaufender Achse besitzt. Über die Stirnwände 29, 30 des Kreiszylindersegmentes ist die Lagerschale 28 mit der Kreisscheibe 26 des Walzenträgers 19 einstückig verbunden, wie man insbesondere der Fig. 3 entnehmen kann. Demgegenüber ist die teilkreiszylindrische Lagerschale 28 im Bereich ihrer achsparallelen Ränder 31, 32 nicht mit der Kreisscheibe 26 verbunden. In diesem Bereich sind vielmehr zwei sich über die ganze axiale Länge der Lagerschale 28 erstreckende Öffnungen 33, 34 vorgesehen, deren Bedeutung weiter unten noch genauer erläutert wird.

In den von der Lagerschale 28 gebildeten Lagerraum sind zwei kreiszylindrische Tragwalzen 35 eingesetzt, die sich über Lagernadeln 37 an der Lagerschale 28 abstützen. Der Durchmesser der Tragwalzen 35 ist in Bezug auf die Tiefe der Lagerschale 28 so bemessen, daß die Mantelflächen der Tragwalzen so weit über die obere plane Oberfläche des Gehäusedeckelteils 22 hinausragen, daß sich auf ihnen abgestützte Gegenstände frei über diese Oberfläche hinweg bewegen können.

Die axiale Länge der beiden Tragwalzen 35 ist in etwa halb so groß wie die axiale Länge der Lagerschale 28, so daß sich die Tragwalzen 35 um ihre miteinander fluchtenden, horizontal verlaufenden Symmetrieachsen 38 frei und voneinander unabhängig drehen können. Zwischen den einander unmittelbar gegenüberliegenden Stirnflächen der Tragwalzen 35 und zwischen den außenliegenden Stirnflächen und den Stirnwänden 29, 30 der Lagerschale 28 ist jeweils ein genügend großer, in den Figuren jedoch nicht wiedergegebener Zwischenraum freigelassen.

Die Lagernadeln 37 besitzen in etwa die gleiche axiale Länge wie die jeweils zugehörige Tragwalze 35. Es sind also in der Lagerschale zwei in axialer Richtung hintereinander angeordnete Gruppen von Lagernadeln 37 vorhanden, von denen jede die zugehörige Tragwalze 35 teilkreisförmig umgibt.

Von oben her wird die Lagerschale durch einen Walzenhalter 20 verschlossen, der mit ihr über Verriegelungselemente 40 fest verbunden ist. Dieser Walzenhalter 20 besitzt, wie man insbesondere der Fig. 1 entnimmt, ebenfalls die Form einer Kreisscheibe, in der eine der rechteckigen Öffnung 27 der Kreisscheibe 26 entsprechende rechteckige Öffnung 42 vorgesehen ist, durch die die Tragwalzen 35 nach oben hinausragen können. Die obere Oberfläche des Walzenhalters 20 ist koplanar zur oberen Oberfläche des Gehäusedeckelteils 22. Sie liegt oberhalb der Symmetrieachsen 38 der beiden Tragwalzen 35 und die in ihr vorgesehene rechteckige Öffnung 42 ist so dimensioniert, daß sie mit ihren achsparallelen Rändern unmittelbar an die Mantelflächen der Tragwalzen 35 heranreicht. Die sich von diesen achsparallelen Rändern nach unten erstreckenden Seitenwände der rechteckigen Öffnung 42 besitzen eine teilkreiszylindrische Form, so daß auch sie den äußeren Mantelflächen der Tragwalzen 35 in geringem Abstand gegenüberliegen. Da, wie bereits erwähnt, die Symmetrieachsen 38 der Tragwalzen 35 tiefer liegen als die obere Oberfläche des Walzenhalters 20, werden die Tragwalzen 35 auf diese Weise vom Walzenhalter 20 in der Lagerschale 28 gehalten.

Im Bereich der achsparallelen Öffnungen 33, 34 des Walzenträgers 19 besitzt der Walzenhalter 20 an seiner Unterseite zwei sich über die ganze Länge dieser Öffnungen 33, 34 erstreckende, nach unten in diese Öffnungen hineinragende Vorsprünge 39, deren untere Flächen so ausgebildet sind, daß sie mit den ihnen gegenüberliegenden achsparalellen Rändern 31, 32 der Lagerschale 28 aus dem Innenraum der Lagerschale 28 herausführende, sich nach unten hin öffnende Kanalabschnitte 43 bilden, durch die hindurch die Lagernadeln 37 aus dem Innenraum der Lagerschale 28 austreten bzw. in diesen Innenraum hineintreten können.

Den dritten Bestandteil der Dreheinheit 16 bildet der Umlaufschalenträger 18, der im wesentlichen ebenfalls aus einer Kreisscheibe 44 mit einer exzentrisch angeordneten rechteckigen Öffnung 45 und einer diese Öffnung unterfangenden Umlaufschale 46 ausgebildet ist. Die rechteckige Öffnung 45 und die Umlaufschale 46 sind so angeordnet, daß sie sich im zusammengebauten Zustand unter der rechteckigen Öffnung 27 bzw. der Lagerschale 28 befinden und mit diesen ausgerichtet sind. Die Abmessungen der Umlaufschale 46 sind so gewählt, daß zwischen ihrer inneren Teilzylinderfläche und der teilzylindrischen Außenfläche der Lagerschale 28 ein Teilzylinder-Ringraum 48 eingeschlossen ist, in den die Kanalabschnitte 43 münden und dessen lichte Weite etwas größer als der Außendurchmesser der Lagernadeln 37 ist. Dieser Teilzylinder-Ringraum 48, der konzentrisch zu dem von der Lagerschale 28 umschlossenen Teilzylinder und damit auch konzentrisch zu den Symmetrie- bzw. Rotationsachsen 38 der Tragwalzen 35 angeordnet ist, ermöglicht es, daß Lagernadeln 37, die beispielsweise bei einer in Fig. 2 im Uhrzeigersinn erfolgenden Drehung der Tragwalzen 35 um ihre Symmetrieachsen 38 durch den in Fig. 2 auf der linken Seite befindlichen Kanalabschnitt 43 aus dem Innenraum der Lagerschale austreten, um die Außenseite der Lagerschale 28 herumgeführt werden und durch den auf der rechten Seite befindlichen Kanalabschnitt 43 wieder in den Innenraum der Lagerschale 28 zurückgelangen können.

Die einer jeden Tragwalze 35 zugeordneten Gruppen von Lagernadeln sind also in einem Umlaufsystem so angeordnet, daß sie sich bei einer Drehung der zugehörigen Tragwalze 35 nicht an Ort und Stelle drehen müssen, sondern weiterwandernd auf der Lagerschale 28 abrollen können. Hierdurch wird die Lagerreibung, die bei einer Drehung der Tragwalzen 35 überwunden werden muß, in erheblichem Maße reduziert.

Die axiale Länge der Umlaufschale 46 ist so gewählt, daß ihre Stirnwände 50, 51 mit ihren Innenflächen direkt an den Außenflächen der Stirnwände 29, 30 der Lagerschale 28 anliegen (siehe Fig. 3). Anders als die Lagerschale 28 geht die Umlaufschale 46 im Bereich ihrer achsparallelen Ränder 52, 53 ohne Unterbrechung in die Kreisscheibe 44 über. An den hier gebildeten Schultern liegt von oben her der Walzenhalter 20 mit seinen nach unten ragenden Vorsprüngen 39 so an, daß die Kanalabschnitte 43 nur zum Innenraum der Lagerschale 28 und zum Teilzylinder-Ringraum 48 hin offen, ansonsten aber verschlossen sind.

Die Kreisscheibe 44 des Umlaufschalenträgers 18 besitzt einen Durchmesser, der größer als der Durchmesser der Kreisscheibe 26 und des Walzenhalters 20 ist und in etwa dem Durchmesser entspricht, den das Gehäusebasisteil 3 zwischen seinen Zylinderwandabschnitten 10 besitzt. An ihrem äußeren Rand besitzt die Kreisscheibe 44 einen sich nach oben und außen vorwölbenden Randwulst 54, der an seiner Unterseite eine sich über den gesamten Umfang erstreckende, im Querschnitt teilkreisförmige Auskehlung aufweist, die auf den Lagerkugeln 14 aufliegt und diese gemeinsam mit der Lagerschulter 9 des Gehäusebasisteils 3 käfigartig umgreift.

Das Gehäusedeckelteil 22 besitzt an seiner Unterseite eine in ihrer Form an den Randwulst 54 angepaßte und diesen im zusammengebauten Zustand übergreifende Ringnut 57, wodurch im zusammengebauten Zustand, in dem, wie oben erwähnt, der Gehäusedeckelteil 22 fest mit dem Gehäusebasisteil 3 verbunden ist, der Umlaufschalenträger 18 so am Gehäusebasisteil 3 befestigt ist, daß er sich nur um die vertikale Symmetrieachse 5 drehen aber ansonsten nicht gegen das Gehäusebasisteil 3 bewegen kann. Da die Verriegelungselemente 40, mit deren Hilfe der Walzenhalter 20 fest mit dem Walzenträger 19 verbunden ist, gleichzeitig auch zur Befestigung dieser beiden eben erwähnten Teile am Umlaufschalenträger 18 dienen, ist somit die gesamte Dreheinheit 16 und mit ihr die vom Walzenhalter 20 gehaltenen Tragwalzen 35 am Gehäusebasisteil 3 in drehbarer Weise befestigt.

Die Rastverbindungen 40 bestehen, wie man insbesondere der Fig. 3 entnimmt, aus von der Unterseite des Walzenhalters 20 nach unten abstehenden Zapfen 58, die jeweils an ihrem unteren Ende einen vergrößerten Kopf mit einer von unten nach oben schräg nach außen verlaufenden Rampenfläche 59 und einer sich daran nach oben anschließenden Rastschulter aufweisen. Im zusammengebauten Zustand erstrecken sich diese Zapfen 58 durch miteinander fluchtende Öffnungen 61, 62 in den Kreisscheiben 26 bzw. 44 des Walzenträgers 19 bzw. des Umlaufschalenträgers 18, deren lichte Weite so bemessen ist, daß der verbreiterte Kopf eines jeden Zapfens 58 durch sie hindurchgeschoben werden kann. Bei diesem Zusammenbauvorgang wird durch das Aufgleiten der Rampenfläche 59 am oberen Rand der Öffnung 61 jeder der Zapfen 58 etwas seitlich verbogen. Aus dieser seitlich verbogenen Lage federn die Zapfen 58 in ihre in Fig. 3 wiedergegebene, genau senkrecht nach unten gerichtete Lage zurück, sobald der verbreiterte Kopf durch die zugehörige untere Öffnung 62 vollständig hindurchgetreten ist. Dabei greift die Rastschulter hinter den unteren Rand der zugehörigen Öffnung 62, wodurch der Walzenhalter 20 fest verriegelt wird.

Der Zusammenbau einer erfindungsgemäßen Lenkrolleneinheit erfolgt daher in der Weise, daß zunächst in die Umlaufschale 46 des Umlaufschalenträgers 18 zwei Gruppen von Lagernadeln 37 so eingelegt werden, wie dies in Fig. 3 gezeigt ist. Danach wird auf den Umlaufschalenträger 18 ein Walzenträger 19 aufgesetzt und der Innenraum der Lagerschale 28 ebenfalls mit zwei Gruppen von Lagernadeln 37 gefüllt, auf die dann die Tragwalzen 35 aufgelegt werden. Hieran anschließend wird von oben her der Walzenhalter 20 über die Tragwalzen 35 geschoben und mit Hilfe der Verriegelungselemente 40 am Umlaufschalenträger 18 befestigt, wodurch auch gleichzeitig eine feste Verbindung dieser beiden Elemente mit dem Walzenträger 19 hergestellt wird. Die so gebildete Dreheinheit 16 kann dann von oben her in das Gehäusebasisteil eingesetzt werden, nachdem zuvor auf dessen Lagerschulter 9 über den gesamten Umfang dicht aneinanderliegend Lagerkugeln 14 angeordnet worden sind. Dann wird von oben her das Gehäusedeckelteil 22 aufgesetzt und mit Hilfe der Verriegelungselemente 24 am Gehäusebasisteil 3 befestigt.

Wie im folgenden unter Bezugnahme auf Fig. 4 noch genauer erläutert wird, kann eine so gebildete Lenkrolleneinheit 1 dann beispielsweise in eine Öffnung 64 eines Förderbahnpaneels 65 eingesetzt werden, wobei die Verriegelungselemente 24 insofern eine Doppelfunktion übernehmen, als sie nach diesem Einsetzvorgang nicht nur Gehäusedeckelteil 22 und Gehäusebasisteil 3 sondern auch die gesamte Lagereinheit 1 mit dem Förderbahnpaneel 65 verbinden. Wie man den Fig. 1 und 2 entnimmt, umfaßt jedes dieser Verriegelungselemente 24 einen nach oben offenen U-förmigen Federteil 68, dessen innerer vertikaler Schenkel 69 mit dem Gehäusedeckelteil 22 einstückig verbunden ist. Der in geringem Abstand zum inneren Schenkel 69 nach oben verlaufende äußere vertikale Schenkel 70 trägt in der Nähe seines oberen freien Endes eine radial nach außen ragende Verriegelungsschulter 71. Der Abstand des äußeren Schenkels 70 vom inneren Schenkel 69 ist so gewählt, daß sich der elastisch auslenkbare äußere Schenkel 70 bei Druck auf sein freies Ende so weit zum Zentrum des Gehäusedeckelteils 22 hinbewegen kann, daß sich die Verriegelungsschulter 71 zumindest um das Maß ihrer radialen Breite zur Mitte des kreisringförmigen Gehäusedeckelteils 22 hin einwärts bewegen kann.

Im zusammengebauten Zustand der Lenkrolleneinheit 1 greifen die U-förmigen Federteile 68 der Verriegelungselemente 24 nach unten durch rechteckige Ausschnitte 73 im Abstützflansch 12 des Gehäusebasisteils 3, wobei insbesondere die Verriegelungsschultern 71 unter einen Steg 74 des jeweiligen Ausschnitts 73 eingreift, wodurch, wie oben bereits erwähnt, die aus Dreheinheit 16, Gehäusebasisteil 3 und Gehäusedeckelteil 22 bestehende Lenkrolleneinheit 1 zusammengehalten ist.

Die Verriegelungsschultern 71 sind jedoch mit einer derartigen radialen Breite ausgestattet, daß sie nach außen unter dem jeweiligen Steg 74 hinausragen und unter den Umfangsrand 75 der zugehörigen Öffnung 64 im Förderbahnpaneel 65 eingreifen können. In diesem Zustand ist die Lenkrolleneinheit 1 nach unten hin durch in die Öffnung 64 hineinragende Sockelsegmente 76 (siehe Fig. 4) gehalten, während sie durch die äußeren Enden der Verriegelungsschultern 71 gegen die Unterseite des Umfangsrandes 75 der Öffnung 64 des Förderbahnpaneels 65 abgestützt ist und dadurch sich nach oben nicht herausbewegen kann.

Zum Herausnehmen der Lenkrolleneinheit 1 aus dem Förderbahnpaneel 65 wird mit einem geeigneten Werkzeug auf die freien Enden der Verriegelungselemente 24 jeweils eine zum Zentrum der Lenkrolleneinheit 1 hin wirkende Kraft ausgeübt, bis die äußeren vertikalen Schenkel 70 so weit zu diesem Zentrum hin eingefedert sind, daß die jeweilige Verriegelungsschulter 71 unter dem Umfangsrand 75 des Förderbahnpaneels 65 hervortritt. In diesem Zustand kann dann die Lenkrolleneinheit 1 nach oben aus der Öffnung 64 herausgezogen werden, ohne daß dabei der sichere Zusammenhalt der Lenkrolleneinheit 1 beeinträchtigt wird, da die Verriegelungsschultern 71 immer noch unter die Stege 74 des Gehäusebasisteils 3 eingreifen.

Wenn die Lenkrolleneinheit auseinandergenommen werden soll, werden die freien Enden der äußeren vertikalen Schenkel 70 noch weiter elastisch zum Zentrum der Lenkrolleneinheit 1 hingebogen, bis die äußeren Enden der Verriegelungsschultern 71 unter den Stegen 74 hervortreten, so daß das Gehäusedeckelteil 22 nach oben vom Gehäusebasisteil 3 abgenommen werden kann. In entsprechender Weise können dann auch die nach unten ragenden Zapfen 58 der Verriegelungselemente 40 nach innen gebogen werden, um ein Auseinandernehmen der Dreheinheit 16 zu ermöglichen.

Die von den Tragwalzen 35 aufgenommene Last wird von diesen über die Lagernadeln 37 auf die Lagerschale 28 des Walzenträgers 19 und von diesem auf die Kreisscheibe 44 des Umlaufschalenträgers 18 übertragen, der seinerseits über die Lagerkugeln 14 auf der Lagerschulter 9 des Gehäusebasisteils 3 abgestützt ist. Von den Lagerschultern 9 wird die aufzunehmende Last auf sehr kurzem Weg über den Abstützflansch 12 übertragen, der im zusammengebauten Zustand auf den Sockelsegmenten 76 der Öffnung 64 aufliegt. Die im Teilzylinder-Ringraum 48 befindlichen Lagernadeln 37 haben keine Last zu tragen und können sich daher mit minimaler Reibung von einem Kanalabschnitt 43 zum anderen bewegen.

Die lastaufnehmenden Teile, d.h. das Gehäusebasisteil 3, der Umlaufschalenträger 18 und der Walzenträger 19 werden vorzugsweise als Tiefziehteile aus Metall gefertigt. Dagegen können der Walzenhalter 20 und das Gehäusedeckelteil 22 aus federelastischem Kunststoff gefertigt werden. Die in der Bodenwand 4 des Gehäusebasisteils 3 vorgesehene Öffnung 6 trägt zur Gewichtsverminderung bei. Man erhält also eine Lenkrolleneinheit, die ein sehr geringes Gewicht aufweist, aus wenigen einfach und kostengünstig herzustellenden Teilen aufgebaut ist und sehr einfach zusammengesetzt werden kann.

## Patentansprüche

1. Lenkrolleneinheit, insbesondere zum Bewegen von Frachtgut auf einer Förderbahn, mit wenigstens einer die zu bewegenden Gegenstände abstützenden Tragwalze (35), die an einem Walzenträger (19) um ihre zentrale Längsachse (38) drehbar gelagert ist, wobei der Walzenträger (19) an einem Gehäusebasisteil (3) um eine Achse (5) drehbar gelagert ist, die zur Längsachse (38) der Tragwalze (35) senkrecht und exzentrisch angeordnet ist, dadurch **gekennzeichnet,**
- daß der Walzenträger (19) für die Tragwalze (35) eine Lagerschale (28) aufweist, die in etwa die Form eines hohlen, an seinen Stirnenden durch Stirnwände (29, 30) abgeschlossenen Teilzylinders besitzt, dessen Längsachse parallel zur Längsachse (38) der Tragwalze (35) angeordnet ist und der die Außenseite der Tragwalze (35) teilweise umgreift,
- daß in der Lagerschale (28) eine Vielzahl von Lagernadeln (37) angeordnet ist, auf denen die Tragwalze (35) drehbar abgestützt ist und deren Längsachsen parallel zur Längsachse (38) der Tragwalze (35) ausgerichtet sind,
- daß eine die Lagerschale (28) von außen umgreifende, teilzylindrische Umlaufschale (46) vorgesehen und im zusammengebauten Zustand so fest mit der Lagerschale (28) verbunden ist, daß sich ihre Längsachse parallel zur Längsachse der Lagerschale (28) erstreckt,
- daß der Zylinderradius der Umlaufschale (46) so bemessen ist, daß zwischen der zylindrischen Innenfläche der Umlaufschale (46) und der zylindrischen Außenfläche der Lagerschale (28) ein Teilzylinder-Ringraum (48) gebildet ist, dessen lichte radiale Weite etwas größer als der Außendurchmesser der Lagernadeln (37) ist,
- daß der Teilzylinder-Ringraum (48) an seinen Stirnenden durch Stirnwände (50, 51) der Umlaufschale (46) verschlossen ist, die im zusammengebauten Zustande an der Lagerschale (28) anliegen,
- daß der Teilzylinder-Ringraum (48) ebenfalls mit Lagernadeln (37) gefüllt ist und mit dem Innenraum der Lagerschale über Öffnungen (33, 34) in Verbindung steht, die in den beiden Randbereichen der Teilzylinderwand der Lagerschale (28) und parallel zu deren Längsachse ausgebildet und so dimensioniert sind, daß die Lagernadeln (37) bei einer Drehung der Trag-walze (35) durch die eine der beiden Öffnungen (33, 34) aus dem Innenraum der Lagerschale (28) in den Teilzylinder-Ringraum (48) und durch die andere der beiden Öffnungen (34, 33) aus dem Teilzylinder-Ringraum (48) in den Innenraum der Lagerschale (28) übertreten können,
und
- daß ein mit dem Walzenträger (19) fest verbindbarer Walzenhalter (20) vorgesehen ist, der die über seine Außenfläche hinaus ragende Tragwalze (35) von außen her umgreift und die Tragwalze (35) und die Lagernadeln (37) in der Lagerschale (28) sichert.

2. Lenkrolleneinheit nach Anspruch 1, dadurch **gekennzeichnet,** daß zwei Tragwalzen (35) vorgesehen sind, die an dem Walzenträger (19) so nebeneinander gelagert sind, daß ihre Symmetrieachsen (38), um die sie voneinander unabhängig drehbar sind, miteinander fluchten, und daß die beiden Tragwalzen (35) in einer gemeinsamen Lagerschale (28) so angeordnet sind, daß zwischen ihren einander gegenüberliegenden Stirnseiten ein Abstand vorhanden ist, der ihre Drehunabhängigkeit gewährleistet.

3. Lenkrolleneinheit nach einem der Ansprüche 1 oder 2, dadurch **gekennzeichnet,** daß die Lagernadeln (37) dieselbe axiale Länge besitzen wie die jeweils zugehörige Tragwalze (35).

4. Lenkrolleneinheit nach einem der vorhergehenden Ansprüche, dadurch **gekennzeichnet,** daß erste Verriegelungselemente (40) vorgesehen sind, mit deren Hilfe der Walzenhalter (20) durch einfaches Einrasten mit dem Walzentrager (19) fest verbindbar ist.

5. Lenkrolleneinheit nach den Ansprüchen 1 und 4, dadurch **gekennzeichnet,** daß mit Hilfe der ersten Verriegelungselemente (40) auch der Umlaufschalenträger (18) durch einfaches Einrasten mit dem Walzenträger (19) fest verbindbar ist.

6. Lenkrolleneinheit nach einem der vorhergehenden Ansprüche, dadurch **gekennzeichnet,** daß ein topfförmig offenes, einen in etwa kreiszylindrischen Querschnitt besitzendes Gehäusebasisteil (3) vorgesehen ist, das beim Betrieb der Lenkrolleneinheit (1) feststeht und das im Endbereich seiner Zylinderwand (8) eine in etwa senkrecht zur Zylinderwand (8) verlaufende, sich über deren gesamten Umfang erstreckende Lagerschulter (9) aufweist, auf der der Walzenträger (19) über Lagerkugeln (14) für seine Drehung um die Achse (5) der Lenkrolleneinheit (1) abgestützt ist, und daß ein in etwa kreisringförmiges Gehäusedeckelteil (22) am Gehäusebasisteil (3) so befestigt ist, daß es die Lagerschulter (9) von außen her übergreift und dabei den Walzenträger (9) am Gehäusebasisteil (3) drehbar fixiert.

7. Lenkrolleneinheit nach Anspruch 1 und 6, dadurch **gekennzeichnet,** daß die Abstützung des Walzenträgers (19) auf den Lagerkugeln (14) über den Umlaufschalenträger (18) erfolgt.

8. Lenkrolleneinheit nach Anspruchs 6 oder 7, dadurch **gekennzeichnet,** daß zweite Verriegelungselemente (24) vorgesehen sind, mit deren Hilfe das kreisringförmige Gehäusedeckelteil (22) durch einfaches Einrasten am Gehäusebasisteil (3) befestigbar ist.

9. Lenkrolleneinheit nach Anspruch 8, dadurch **gekennzeichnet,** daß die Lenkrolleneinheit (1) mit Hilfe der zweiten Verriegelungselemente (24) an einer Basis (65) durch einfaches Einrasten befestigbar ist.

## Claims

1. Castor assembly, in particular for transporting cargo on a conveyor system, with at least one roller (35) supporting the objects to be moved and being disposed on a roller carrier (19) so that the roller can rotate about its central long axis (38), the roller carrier (19) being rotatably mounted on a housing base (3) so that its axis of rotation (5) is perpendicular to and offset from the long axis (38) of the roller (35),
**characterized in that**:
- the roller carrier (19) for the roller (35) incorporates a bearing trough (28) in approximately the form of a partial cylinder closed at its ends by end walls (29, 30), so disposed that the long axis of the trough is parallel to the long axis (38) of the roller (35) and the trough partially encloses the outer surface of the roller (35),
- within the bearing trough (28) a plurality of bearing needles (37) are arranged so as to rotatably support the roller (35), with their long axes parallel to the long axis (38) of the roller (35),
- the bearing trough is seated in an outer shell (46) in the form of a partial cylinder which, in the assembled state of the castor, is fixed to the bearing trough (28) in such a way that its long axis is parallel to the long axis of the bearing trough (28)
- the radius of the partial cylinder at the outer shell (46) is so dimensioned that between the cylindrical inner surface of the outer shell (46) and the cylindrical outer surface of the bearing trough (28) there is a curved space (48) in the form of a partial cylinder, somewhat wider in the radial direction than the outside diameter of the bearing needles (37),
- the partial cylinder curved space (48) is closed at its ends by end walls (50, 51) of the outer shell (46), which in the assembled state are contiguous with the bearing trough (28),
- the partial cylinder curved space (48) is also filled with bearing needles (37) and communicates with the space inside the bearing trough by way of apertures (33, 34) in the two marginal regions of the wall of the bearing trough (28), the apertures (33, 34) being parallel to the long axis of the trough (28) and so dimensioned that when the roller (35) rotates, the bearing needles (37) can pass through one of the two openings (33, 34) from the interior of the trough (28) into the curved space (48) and through the other of the two openings (34, 33) from the curved space (48) into the interior of the bearing trough (28),
and
- a roller holder (20) is provided that can be firmly attached to the roller carrier (19), surrounding the roller (35), which projects above its outer surface, and keeping the bearing needles (37) within the bearing trough (28).

2. Castor assembly according to Claim 1,
**characterized in that**
two rollers (35) are provided, disposed side by side on the roller carrier (19) with aligned axes of symmetry (38), about which they can rotate independently of one another, and in that the two rollers (35) are arranged in a common bearing trough (28) in such a way that the distance between their adjacent ends is sufficient to allow them to rotate independently.

3. Castor assembly according to one of the claims 1 or 2,
**characterized in that**
the bearing needles (37) have the same axial length as the associated roller (35).

4. Castor assembly according to one of the preceding claims,
**characterized in that**
first latch elements (40) are provided by means of which the roller holder (20) can be fixedly attached to the roller carrier (19) by a simple catch engagement.

5. Castor assembly according to Claims 1 and 4,
**characterized in that**
the first latch elements (40) are also used to fixedly attach the outer shell carrier (18) to the roller carrier (19) by a simple catch engagement.

6. Castor assembly according to one of the preceding claims,
**characterized in that**
a housing base (3) is provided in the form of an approximately cylindrical cup open at the top, which remains stationary during operation of the castor assembly and which at the upper end of its cylindrical wall (8) comprises over its entire circumference a bearing shoulder (9) extending approximately perpendicular to the cylindrical wall (8) on which the roller carrier (19) rests supported by ball bearings (14) so that it can rotate about the axis (5) of the castor assembly (1), and and in that an approximately annular housing cover plate (22) is provided attached to the housing base (3) in such a way that the annular housing cover plate (22) projects from outwards over the shoulder (9), thereby holding the roller carrier (19) rotatably on the housing base (3).

7. Castor assembly according to Claims 1 and 6,
**characterized in that**
the roller carrier (19) is supported on the ball bearings (14) by way of the outer shell carrier (18).

8. Castor assembly according to Claim 6 or 7,
**characterized in that**
second latch elements (24) are provided by means of which the annular housing cover plate (22) can be attached to the housing base (3) by a simple catch engagement.

9. Castor assembly according to Claim 8,
**characterized in that**
by means of the second latch elements (24) the castor assembly (1) can be attached to a base (65) by a simple catch engagement.

## Revendications

1. Ensemble pour roulettes à pivot, en particulier pour le déplacement de marchandises sur une bande transporteuse, comportant au moins un rouleau porteur (35) supportant les objets à déplacer, qui est monté rotatif autour de son axe longitudinal central (38) sur un support de rouleau (19), le support de rouleau (19) étant monté rotatif dans une partie de base de boîtier (3) autour d'un axe (5), lequel est disposé verticalement et excentriquement par rapport à l'axe longitudinal (38) du rouleau porteur (35), caractérisé
- en ce que le support de rouleau (19) du rouleau porteur (35) comporte une coquille de coussinet (28) qui présente sensiblement la forme d'un cylindre partiel creux, fermé à ses extrémités frontales par des parois frontales (29, 30), dont l'axe longitudinal est disposé parallèlement à l'axe longitudinal (38) du rouleau porteur (35) et qui entoure partiellement la face externe du rouleau porteur (35),
- en ce que, dans la coquille de coussinet (28), sont prévues une multiplicité d'aiguilles de roulement (37) sur lesquelles s'appuie à rotation le rouleau porteur (35) et dont les axes longitudinaux sont dirigés parallèlement à l'axe longitudinal (38) du rouleau porteur (35),
- en ce qu'une coquille tournante (46) partiellement cylindrique entourant de l'extérieur la coquille de coussinet (28) est prévue et est reliée rigidement en condition d'assemblage à la coquille de coussinet (28) de sorte que son axe longitudinal s'étend parallèlement à l'axe longitudinal de la coquille de coussinet (28),
- en ce que le rayon du cylindre de la coquille tournante (46) est calculé de telle sorte qu'entre la face interne cylindrique de la coquille tournante (46) et la surface externe cylindrique de la coquille de coussinet (28) est formée une chambre annulaire partiellement cylindrique (48), dont l'ouverture radiale est légèrement plus grande que le diamètre externe des aiguilles de roulement (37),
- en ce que la chambre annulaire partiellement cylindrique (48) est fermée à ses extrémités frontales par des parois frontales (50, 51) de la coquille tournante (46), lesquelles reposent en condition d'assemblage sur la coquille de coussinet (28),
- en ce que la chambre annulaire partiellement cylindrique (48) est emplie également d'aiguilles de roulement (37) et est en communication avec la chambre interne de la coquille de coussinet par des ouvertures (33, 34), lesquelles sont réalisées dans les deux régions marginales de la paroi partiellement cylindrique de la coquille de coussinet (28) et parallèlement à son axe longitudinal et sont dimensionnées de telle sorte que les aiguilles de roulement (37) peuvent, lors d'une rotation du rouleau porteur (35), pénétrer au travers de l'une des deux ouvertures (33, 34) depuis la chambre interne de la coquille de coussinet (28) dans la chambre annulaire partiellement cylindrique (48) et au travers de l'autre des deux ouvertures (34, 33) depuis la chambre annulaire partiellement cylindrique (48) dans la chambre interne de la coquille de coussinet (28), et
- en ce qu'il est prévu un porte-rouleau (20) relié rigidement au support de rouleau (19), qui, par sa surface extérieure, entoure de l'extérieur le rouleau porteur (35) dépassant vers l'extérieur et maintient le rouleau porteur (35) et les aiguilles de roulement (37) dans la coquille de coussinet (28).

2. Ensemble pour roulettes à pivot selon la revendication 1, caractérisé en ce que sont prévus deux rouleaux porteurs (35) qui sont montés proches l'un de l'autre sur le support de rouleau (19) de telle sorte que leurs axes de symétrie (38), sur lesquels ils sont montés rotatifs indépendamment l'un de l'autre, soient alignés mutuellement, et en ce que les deux rouleaux porteur (35) sont montés dans une coquille à coussinet commune (28), de telle sorte qu'entre leurs extrémités frontales tournées l'une vers l'autre est prévu un écart qui autorise leur indépendance en rotation.

3. Ensemble pour roulettes à pivot selon l'une des revendications 1 et 2, caractérisé en ce que les aiguilles de roulement (37) possèdent la même longueur axiale que le rouleau porteur (35) correspondant.

4. Ensemble pour roulettes à pivot selon l'une des revendications précédentes, caractérisé en ce que sont prévus des premiers éléments de verrouillage (40) à l'aide desquels le porte-rouleau (20) est susceptible d'être relié rigidement par simple encliquetage au support de rouleau (19).

5. Ensemble pour roulettes à pivot selon les revendications 1 et 4, caractérisé en ce que, avec l'aide des premiers éléments de verrouillage (40), le support de coquille tournante (18) est également propre à être relié rigidement par simple encliquetage au support de rouleau (19).

6. Ensemble pour roulettes à pivot selon l'une des revendications précédentes, caractérisé en ce qu'il est prévu une partie de base de boîtier (3) ouverte en forme de coupelle et possédant une section sensiblement circulaire, qui, lors de l'utilisation de l'ensemble pour roulettes à pivot, est immobile et qui présente, dans la région terminale de sa paroi cylindrique (8), un épaulement d'appui (9) s'étendant de manière sensiblement perpendiculaire à la paroi cylindrique (8) et sensiblement sur toute sa périphérie, sur lequel épaulement s'appuie le support de rouleau (19) par des billes de roulement (14) pour sa rotation autour de l'axe (5) de l'ensemble pour roulettes a pivot (1), et en ce qu'un couvercle de boîtier (22) de forme sensiblement circulaire est fixé sur la partie de base de boîtier (3) de telle sorte qu'il recouvre l'épaulement d'appui (9) de l'extérieur et qu'il fixe ainsi le support de rouleau (9) en rotation sur la partie de base de boîtier (3).

7. Ensemble pour roulettes à pivot selon les revendications 1 et 6, caractérisé en ce que l'appui du support de rouleau (19) sur les billes de roulement (14) est réalisé par le support de coquille tournant (18).

8. Ensemble pour roulettes à pivot selon l'une des revendications 6 et 7, caractérisé en ce que sont prévus des seconds éléments de verrouillage (24) à l'aide desquels le couvercle de boîtier (22) de forme circulaire est susceptible d'être fixé à la base de boîtier (3) par simple encliquetage.

9. Ensemble pour roulettes à pivot selon la revendication 8, caractérisé en ce que l'ensemble pour roulettes à pivot (1) est susceptible d'être fixé à une base (65) par simple encliquetage à l'aide des seconds éléments de verrouillage (24).
